# EUROPÄISCHE PATENTSCHRIFT

(11) **EP 2 746 019 B1**
(45) Veröffentlichungstag und Bekanntmachung des Hinweises auf die Patenterteilung: **20.01.2021**
(21) Anmeldenummer: 13196019.7
(22) Anmeldetag: 06.12.2013
(51) Int. Cl.: B29B 11/16, B29C 51/26, B29C 51/42, B29C 33/04, B29C 70/56, B29C 70/46, B29C 35/04

(54) **Verfahren und Vorrichtung zum Herstellen von Werkstücken aus Faserhalbzeugen**
Device and method for manufacturing workpieces from semifinished fibrous products
Procédé et dispositif de fabrication de pièces à partir de produits semi-finis en fibres

(30) Priorität: 24.12.2012 DE 102012224357
(43) Veröffentlichungstag der Anmeldung: 25.06.2014
(73) Patentinhaber: FRIMO Group GmbH, 49504 Lotte (DE)
(72) Erfinder: Rübsam, Thomas, 99974 Ammern (DE); Joachim, Thomas, 99817 Eisenach (DE)
(74) Vertreter: Hoffmann Eitle

(56) Entgegenhaltungen:
- WO-A1-2007/041782
- FR-A1- 2 542 666
- US-A- 5 824 246
- US-A1- 2006 012 075
- US-A1- 2008 014 453
- DATABASE WPI Week 199835 Thomson Scientific, London, GB; AN 1998-401263 XP002722721, -& ES 2 116 839 A1 (GARCIA AGUILAR A) 16. Juli 1998 (1998-07-16)

## Beschreibung

### Technisches Gebiet

Die vorliegende Erfindung betrifft ein Verfahren sowie eine Vorrichtung zum Herstellen von Werkstücken, insbesondere Vorformlingen, aus Faserhalbzeugen.

### Stand der Technik

Der Anmelderin ist ein Verfahren zur Herstellung von Werkstücken, insbesondere Vorformlingen, aus Faserhalbzeugen bekannt, bei dem in einer ersten Bearbeitungsstation ein mit Binder versehenes Faserhalbzeug erwärmt wird, bevor dieses anschließend in eine zweite Bearbeitungsstation befördert wird, um es dort zu verformen. Dabei wird das mit Binder versehene Faserhalbzeug in der ersten Bearbeitungsstation auf eine Temperatur erwärmt, die über der Aktivierungstemperatur des Binders liegt, um so sicherzustellen, dass das Faserhalbzeug bei Ankunft in der zweiten Bearbeitungsstation nicht bereits unter die Aktivierungstemperatur des Binders abgekühlt ist.

Dieses Verfahren besitzt den Nachteil, dass das mit Binder versehene Faserhalbzeug in der ersten Bearbeitungsstation überhitzt werden muss und ferner von der ersten zur zweiten Bearbeitungsstation befördert werden muss. Dies führt erstens zu einem energetisch ineffizienten Prozess (Überhitzung) und zweitens zu einer langen Fertigungszeit (Transport) und damit hohen Produktionskosten. Darüber hinaus ergeben sich aus dem Verfahren hohe Produktionssystemkosten auf Grund der hohen Anzahl von Bearbeitungsstationen und erforderlichen kostenintensiven, antihaft-beschichteten Transportwerkzeugen, die ein Verkleben der Transortwerkzeuge mit dem aktivierten Binder des Faserhalbzeugs verhindern.

Ferner bezieht sich die US 5 824 246 A auf ein Verfahren zum Ausbilden eines Binder-Verbundprodukts, bei dem eine mit Fasern angereicherte Bindemittelmasse mittels Heißluft aktiviert und anschließend mittels einer Verformungseinrichtung verformt wird.

Die FR 2 542 666 A1 bezieht sich auf ein Verfahren und eine Vorrichtung, bei dem/der ein Halbzeug in einem Verformungswerkzeug mittels Heißluft, welche dem Halbzeug über Öffnungen in einem Formunterteil zugeführt wird, aktiviert wird, wobei die zugeführte Heißluft über Öffnungen in einem Formoberteil von dem Halbzeug weggeführt wird.

Die WO 2007/041782 A1 bezieht sich auf ein Verfahren und eine Vorrichtung, bei dem/der aufeinander geschichtete Halbzeuge mittels einer Verformungseinrichtung verformt werden, wobei eine Erwärmung der aufeinander geschichteten Halbzeuge durch Heizspulen, Heißluft oder Infrarotlicht erfolgt.

Darüber hinaus bezieht sich die ES 2 116 839 A1 auf ein Verfahren zum Verformen von Textilmaterial, bei dem die Verformung und die Erwärmung des Materials mittels Heißluft in der gleichen Vorrichtung erfolgen.

Als weiteres Dokument ist die US 2006/0012075 A1 bekannt, die ein Verfahren und eine Vorrichtung zum Ausbilden eines Innenverkleidungsteils zeigt.

### Darstellung der Erfindung

Es ist daher Aufgabe der vorliegenden Erfindung ein Verfahren sowie eine Vorrichtung bereitzustellen, mit dem/der die Fertigungszeit zur Herstellung von Werkstücken, insbesondere Vorformlingen, aus Faserhalbzeugen auf eine energieeffiziente Art und Weise reduziert werden kann.

Die Lösung der Aufgabe erfolgt durch das Verfahren des Patentanspruchs 1 sowie die Vorrichtung des Patentanspruchs 7. Bevorzugte Ausgestaltungen ergeben sich aus den jeweiligen Unteransprüchen.

Der Erfindung liegt der Gedanke zugrunde, dass sich die Fertigungszeit eines Werkstücks aus den Transportzeiten zwischen verschiedenen Bearbeitungsstationen und den eigentlichen Bearbeitungszeiten auf den Bearbeitungsstationen zusammensetzt und das die Produktionssystemkosten maßgeblich durch die Anzahl von Bearbeitungsstationen bestimmt werden. Ein signifikanter Treiber zur Fertigungszeitminimierung stellt daher ein Verkürzen oder sogar Abschaffen von Transportzeiten dar; ein signifikanter Treiber zur Produktionssystemkostenminimierung stellt daher ferner eine Reduzierung der Anzahl von Bearbeitungsstationen dar. Dies führt zu dem Schluss, dass es vorteilhaft ist, mehrere Bearbeitungsstationen zusammenzufassen, um so in einer Bearbeitungsstation mehrere Bearbeitungsschritte auszuführen zu können. Auf der einen Seite werden damit die Fertigungszeiten reduziert, da Transportzeiten zwischen Bearbeitungsstationen wegfallen, und auf der anderen Seite resultiert daraus ein kostengünstigeres Produktionssystem, da die Anzahl von Bearbeitungsstation reduziert wird.

Aus diesem Grund ist erfindungsgemäß vorgesehen, dass die Erwärmung des mit Binder versehenen Faserhalbzeugs und die Verformung des mit aktiviertem Binder versehenen Faserhalbzeugs in der gleichen Bearbeitungsstation stattfinden. Auf diese Weise entfällt die Transportzeit zwischen der Heizeinrichtung und der Verformungseinrichtung, was zu einer geringeren Fertigungsdauer und damit geringeren Fertigungskosten führt. Darüber hinaus ist kein Überhitzen des Faserhalbzeugs in der Heizeinrichtung erforderlich, da die Wärmeverluste während des Transports von Heizeinrichtung zu Verformeinrichtung umgangen werden. Ferner sind keine komplexen, kostenintensiven und antihaftbeschichteten Transportwerkzeuge notwendig, um das mit aktiviertem Binder versehene Halbzeug von der Heizeinrichtung zur Verformeinrichtung zu transportieren. Damit führt die Erfindung zu einer Reduktion von Fertigungszeit und Produktionskosten und darüber hinaus zu einer günstigeren Produktionseinrichtung. Ferner weißt das Formwerkzeug mindestens einen Konturspanner auf.

Die Wärmezufuhr erfolgt dabei durch Heißluft. Dies führt zu dem Vorteil, dass so eine schnelle Erwärmung des Faserhalbzeugs ermöglicht wird, da die Heißluft mit einer hohen Relativgeschwindigkeit gegenüber dem Faserhalbzeugs in den Zwischenraum zwischen Formober- und Formunterteil eindüsbar ist. Dies führt zu hohen Nusselt-Zahlen und damit hohen Wärmeübertragungskoeffizienten zwischen Heißluft und Faserhalbzeug. Darüber hinaus ermöglicht diese bevorzugte Ausführungsform einen variothermen Erwärmungsprozess mit isothermen Werkzeugen, da die Wärmezufuhr nicht über die Werkzeuge erfolgt.

Dabei erfolgt die Heißluftzuführung in den Zwischenraum zwischen Formober- und Formunterteil durch mindestens eine Öffnung in dem Konturspanner. Dies ist insofern vorteilhaft, als dass der Konturspanner somit einer weiteren Funktion, nämlich der Wärmezufuhr zu dem Zwischenraum zwischen Formober- und Formunterteil, dient. Dies spart mindestens ein Bauteil und führt somit zu einer weniger komplexen und kostengünstigeren Vorrichtung.

Gemäß einer bevorzugten Ausführungsform findet die Verformung des mit aktivertem Binder versehenen Faserhalbzeugs durch das Schließen eines Formwerkzeugs, das ein Formober- und ein Formunterteil aufweist, statt. Das Formwerkzeug ist dabei so ausgestaltet, dass zum Schließen des Formwerkzeugs Formober- und Formunterteil aufeinander zu und zum Öffnen des Formwerkzeugs voneinander weg bewegbar sind. Im geschlossenen Zustand weist das Formwerkzeug dabei einen Zwischenraum auf, der ein Negativ von dem zu fertigenden Werkstück darstellt. Auf diese Weise wird eine Verformung eines Faserhalbzeugs auf einfache, kostengünstige Weise ermöglicht. Ferner ist das Fertigen von verschiedenen Werkstückformen insofern einfach, als dass lediglich Formober- bzw. Formunterteil des Formwerkzeugs ausgetauscht werden müssen, um eine neue Form herzustellen.

Gemäß einer weiteren bevorzugten Ausführungsform kann das Schließen des Formwerkzeugs zwei Schritte aufweisen. In einem ersten Schritt wird das Formwerkzeug teilweise geschlossen, um es in einen teilweise geschlossenen Zustand zu bringen. In einem zweiten Schritt wird das Formwerkzeug vollständig geschlossen, um es in einen vollständig geschlossenen Zustand zu bringen. Dabei wird das Faserhalbzeug in einem ersten Schritt (teilweise geschlossener Zustand) relativ zum Formwerkzeug durch das Formwerkzeug fixiert, umso weitere Bearbeitungsschritte, z.B. Erwärmen, an dem Faserhalbzeug ausführen zu können. In einem zweiten Schritt wird das Formwerkzeug vollständig geschlossen, um das Faserhalbzeug zu verformen. Die Ausgestaltung des Formwerkzeugs in der bevorzugten Ausführungsform ermöglicht es somit, zwei Aufgaben mit einem Bauteil auszuführen, nämlich das Fixieren und das Verformen. Dies spart Kosten und verringert dabei die Komplexität und damit die Störanfälligkeit der Vorrichtung.

Gemäß einer weiteren bevorzugten Ausführungsform wird beim teilweisen Schließen des Formwerkzeugs ein Zwischenraum zwischen Formober- und Formunterteil nach außen abgedichtet. Dies führt zu dem Vorteil, dass der Zwischenraum auf eine energetische effiziente Weise erwärmt werden kann, da ein Entweichen von erwärmter Luft durch die Dichtung unterbunden oder zumindest verringert wird.

Gemäß einer weiteren besonders bevorzugten Ausführungsform erfolgt die Heißluftzuführung in den Zwischenraum zwischen Formober- und Formunterteil durch mindestens eine weitere Öffnung in dem Formwerkzeug. Dies ist insofern vorteilhaft, als dass das Formwerkzeug somit einer weiteren Funktion, nämlich der Wärmezufuhr zu dem Zwischenraum zwischen Formober- und Formunterteil, dient. Dies spart mindestens ein Bauteil und führt somit zu einer weniger komplexen und kostengünstigeren Vorrichtung.

Gemäß einer weiteren besonders bevorzugten Ausführungsform wird der Binder während der Erwärmung nicht überhitzt. Dies führt zu dem Vorteil, dass somit ein energetisch effizienterer und damit kostengünstigerer Fertigungsprozess geschaffen wird.

Gemäß einer weiteren besonders bevorzugten Ausführungsform wird das mit Binder versehene Faserhalbzeug gleichmäßig erwärmt. Dies führt zu einer gleichzeitigen Aktivierung des Binders und unterbindet damit ein lokales Überhitzen des Binders. Auch diese bevorzugte Ausführungsform führt damit zu einem energetisch effizienteren Bearbeitungsprozess.

Gemäß der Erfindung weist die Vorrichtung, die die Merkmale des unabhängigen Anspruchs 7 umfasst, ferner mindestens einen Konturspanner auf, der mit dem Formober- oder Formunterteil verbunden ist, wobei der Konturspanner so ausgestaltet ist, dass er dem jeweiligen Formober- oder Formunterteil während des Schließens des Formwerkzeugs bis zu dem teilweise geschlossenen Zustand vorauseilt und bei einem weiteren Schließen bis zu dem vollständig geschlossenen Zustand stillsteht. Dies ermöglicht somit eine einfache und automatische Fixierung des Faserhalbzeugs durch den Konturspanner beim Schließen des Formwerkzeugs. Darüber hinaus stellt die Kinematik des Konturspanners sicher, dass das Faserhalbzeug beim vollständigen Schließen des Formwerkzeugs nicht beschädigt wird.

Die erfindungsgemäße Vorrichtung kann einen ersten Konturspanner aufweisen, der mit dem Formunterteil verbunden ist, und einen zweiten Konturspanner aufweisen, der mit dem Formoberteil verbunden ist, wobei die Konturspanner jeweils hülsenförmig ausgestaltet sind und konzentrisch zu Formunter- bzw. Formoberteil angeordnet sind. Diese bevorzugte Ausgestaltung führt zu dem Vorteil, dass so eine umlaufende Fixierung des Faserhalbzeugs ermöglicht wird. Ferner ermöglicht sie eine einfache Dichtung des Zwischenraums zwischen Formunter- und Formoberteil.

Gemäß einer weiteren besonders bevorzugten Ausführungsform der Erfindung weist die Vorrichtung mindestens jeweils eine Öffnung in Formober- und Formunterteil auf. Dies führt dazu, dass die Heißluft dem Faserhalbzeugs auf beiden Seiten zugeführt werden kann. Somit wird eine gleichmäßige Erwärmung des Faserhalbzeugs ermöglicht, was zu einem energetisch effizienteren Fertigungsprozess führt.

### Kurze Beschreibung der Zeichnungen

Fig. 1 zeigt eine Schnittdarstellung eines Formwerkzeugs zum Herstellen von Werkstücken, insbesondere Vorformlingen, aus Faserhalbzeugen in einem geöffneten Zustand.
Fig. 2 zeigt eine Schnittdarstellung eines Formwerkzeugs zur Herstellung von Werkstücken, insbesondere Vorformlingen, aus Faserhalbzeugen in einem teilweise geschlossenen Zustand.

### Ausführliche Beschreibung einer bevorzugten Ausführungsform

Eine bevorzugte Ausführungsform der vorliegenden Erfindung wird nachfolgend unter Bezugnahme auf die begleitenden Zeichnungen beschrieben. Weitere Varianten oder Modifikationen können jeweils miteinander kombiniert werden, um weitere Ausführungsformen auszubilden.

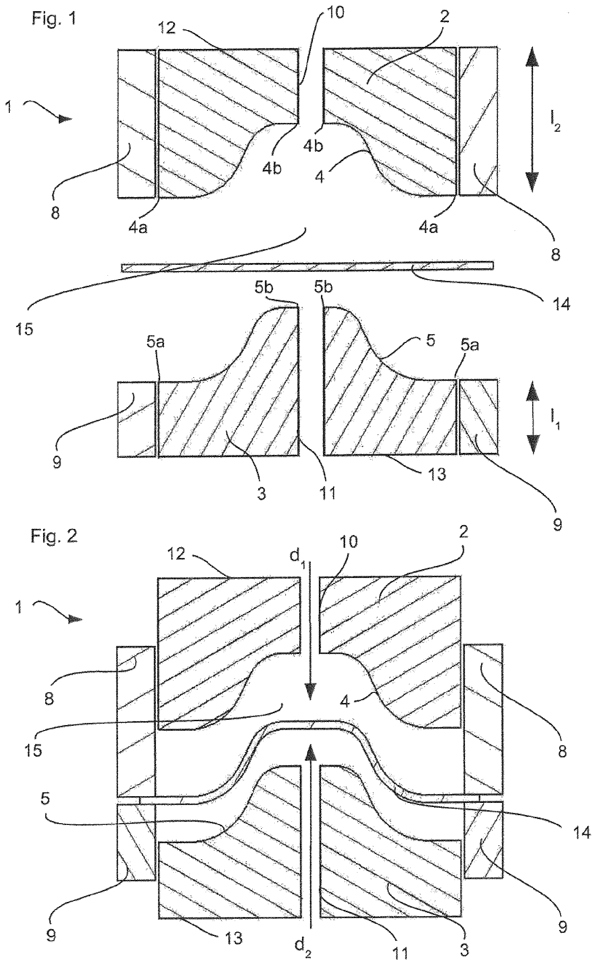

Fig. 1 und 2 zeigen ein Formwerkzeug 1 zum Bilden von Vorformlingen aus Faserhalbzeugen 14. Das Formwerkzeug 1 umfasst einen Formenträger (nicht gezeigt) sowie ein Formober- 2 und ein Formunterteil 3. Dabei ist das Formwerkzeug 1 so ausgebildet, dass Formober- 2 und Formunterteil 3 zum Öffnen des Formwerkzeugs 1 voneinander weg (Fig. 1) und zum Schließen des Formwerkzeugs 1 aufeinander zu (Fig. 2) bewegbar sind.

In der bevorzugten Ausführungsform ist der Innenkonturverlauf des Formoberteils 4 und der Innenkonturverlauf des Formunterteils 5 dabei jeweils so ausgestaltet, dass der eine jeweils ein Negativ des anderen darstellt. So weist das Formunterteil 3 einen Innenkonturverlauf 5 in einem Quer- und/oder Längsschnitt auf, der von den Randbereichen 5a stetig bis zu einer maximalen Erhebung 5b in der Mitte des Formunterteils 3 ansteigt. Im Gegensatz dazu weist das Formoberteil 2 einen Innenkonturverlauf 4 in einem Quer- und/oder Längsschnitt auf, der von den Randbereichen 4a stetig bis zu einer Vertiefung 4b in der Mitte des Formoberteils 2 sinkt. In einem vollständig geschlossenen Zustand des Formwerkzeugs 1 weist dieses einen Zwischenraum 15 zwischen Formober - 2 und Formunterteil 3 auf, der ein Negativ des zu fertigenden Werkstücks darstellt. Selbstverständlich sind hier auch andere Innenkonturverläufe der Formober 2- und Formunterteile 3 denkbar, so z.B. solche, bei denen der Innenkonturverlauf des Formoberteils 4 nicht ein Negativ des Innenkonturverlaufs des Formunterteils 5 darstellt, um so beispielsweise Vorformlinge mit variierender Dicke herstellen zu können.

In der bevorzugten Ausführungsform umfasst das Formwerkzeug 1 ferner einen ersten Konturspanner 8 und einen zweiten Konturspanner 9. Die Konturspanner 8, 9 sind jeweils hülsenartig ausgestaltet, konzentrisch zu dem Formober- 2 bzw. Formunterteil 3 angeordnet und jeweils relativ zu diesen verschiebbar. Dabei weisen die Konturspanner 8, 9 jeweils eine Höhe l₁, l₂ auf, die der Höhe des Formober- 2 bzw. Formunterteils 3 entspricht. Auch hier sind weitere Ausführungsformen denkbar, so z.B. Konturspanner, die nicht hülsenartig ausgebildet und damit nicht umlaufend sind oder Konturspanner mit Öffnungen, durch die Heißluft eindüsbar ist.

Ferner weisen die Konturspanner 8, 9 eine Kinematik auf, so dass sie beim Schließen des Formwerkzeugs 1, dem Formober- 2 bzw. Formunterteil 3 bis zu einem gewissen Punkt, der im Rahmen dieser Erfindung als teilweise geschlossener Zustand definiert ist, vorauseilen, wie in Fig. 2 zu sehen; bei einem weiteren Schließen, das über den teilweise geschlossenen Zustand hinausgeht, stehen die Konturspanner 8, 9 hingegen still, sodass Formober- 2 bzw. Formunterteil 3 mit den Konturspanner 8, 9 aufschließen. Dem entgegengesetzt verhalten sich die Konturspanner 8, 9 beim Öffnen des Formwerkzeugs 1. So stehen diese bis zum Erreichen des teilweise geschlossenen Zustands still und Formober- 2 bzw. Formunterteil eilen den Konturspannern 8, 9 voraus; wird das Formwerkzeug 1 hingegen über den teilweise geschlossenen Zustand hinaus geöffnet, so schließen die Konturspanner 8, 9 mit dem Formober - 2 bzw. Formunterteil auf.

Darüber hinaus sind die Konturspanner 8, 9 und das Formober-2 bzw. Formunterteil 3 so ausgestaltet, dass sie einen Zwischenraum 15 zwischen Formober- 2 und Formunterteil 3 in dem teilweise geschlossen Zustand (Fig. 2) abdichten. Unter einem abgedichteten Raum wird im Rahmen dieser Erfindung verstanden, dass in diesen Raum Luft eingedüst werden kann, ohne dass diese umgehend entweicht. Vor allem wird darunter verstanden, dass beispielsweise ein Eindüsen von Heißluft in einen abgedichteten Raum zu einem signifikanten Anstieg der mittleren Raumtemperatur in diesem Raum führt.

Um einen Wärme- bzw. Kältestau zu verhindern, bei dem die Heißluft nicht in das Faserhalbzeug eindringen kann, kann im Rahmen der Erfindung ein Ventil ausgebildet sein, über das sich ein aus dem Zwischenraum entweichender Luftmassenstrom einstellen lässt.

Das Formwerkzeug 1 weist in der bevorzugten Ausführungsform weiter einen Spalt 10 in dem Formoberteil 2 und eine Spalt 11 in dem Formunterteil 3 auf. Die Spalte 10, 11 verlaufen dabei senkrecht, in Richtung d₁ bzw. d₂, zu der oberen 12 bzw. unteren 13 Außenwand des Formwerkzeugs 1, gehen durch das gesamte Formober- 2 bzw. Formunterteil 3 hindurch und sind dabei jeweils mittig in Formober- 2 und Formunterteil 3 angeordnet. Ferner ist eine Heißluft-Heizeinrichtung (nicht gezeigt) mit dem Formwerkzeug 1 so verbunden, dass die Heißluft dem Zwischenraum 15 zwischen Formober- 2 und Formunterteil 3 durch die Schlitze 10, 11 zuführbar ist. Selbstverständlich sind auch andere Ausgestaltungen denkbar, so z.B. ein Formwerkzeug mit mehr als einem Schlitz in Formober- bzw. Formunterteil oder Schlitzen die schräg zu den Außenwänden verlaufen.

Im Folgenden wird ein bevorzugtes Verfahren zum Herstellen eines Vorformlings mit einem Formwerkzeug 1 der zuvor beschriebenen bevorzugten Vorrichtung beschrieben.

In einem ersten Schritt wird das Formwerkzeug 1 in einen geöffneten Zustand (Fig. 1) gebracht.

In einem zweiten Schritt wird das mit Binder versehene Faserhalbzeug 14 in das geöffnete Formwerkzeug 1 eingelegt und das Formwerkzeug 1 teilweise geschlossen (Fig. 2). Beim teilweise Schließen des Formwerkzeugs 1 eilen die Konturspanner 8, 9 dem Formober- 2 bzw. Formunterteil 3 voraus, was dazu führt, dass das mit Binder versehene Faserhalbzeug 14 durch die Konturspanner 8, 9 relativ zum Formwerkzeug 1 fixiert wird. Die Konturspanner 8, 9 und das Formober- 2 bzw. Formunterteil 3 dichten dabei einen Zwischenraum 15 in dem teilweise geschlossenen Zustand ab. Darüber hinaus kommt es beim teilweisen Schließen des Formwerkzeugs 1 zu einer Vorverformung des Faserhalbzeugs 14, wie in Fig. 2 illustriert.

Nunmehr wird das mit Binder versehene Faserhalbzeug 14, das durch die Konturspanner 8, 9 relativ zum Formwerkzeug 1 fixiert ist, durch Heißluft erwärmt. Die Heißluft wird dabei über eine Heißluft-Heizeinrichtung (nicht gezeigt) erzeugt und durch die Schlitze 10, 11 in Richtung d₁ bzw. d₂ dem abgedichteten Zwischenraum 15 zwischen Formober- 2 und Formunterteil 3 zugeführt.

Die Zufuhr der Heißluft bzw. die Geometrie des Zwischenraums ist dabei so ausgestaltet, dass es zu einer gleichmäßigen Erwärmung des mit Binder versehenden Faserhalbzeugs 14 und damit zu einem gleichzeitigen Aktivieren des Binders kommt. Dabei wird der Binder nicht überhitzt, sondern nur bis auf eine Temperatur erwärmt, bei der eine Aktivierung des Binders stattfindet. Dabei kann das Faserhalbzeug so ausgebildet sein, dass es die Wärmeverteilung auf Grund guter Wärmeleitfähigkeitseigenschaften unterstützt, z.B. durch eingelagerte Kohlefasern.

Schließlich wird die Heißluftzufuhr abgestellt, und das Formwerkzeug 1 vollständig geschlossen. Wir zuvor beschrieben stehen die Konturspanner 8, 9 nun still und nur Formober- 2 bzw. Formunterteil 3 bewegen sich, um das Faserhalbzeug 14 in seinen endgültigen Verformungszustand zu bringen. Die endgültige Verformung findet dabei rund 1-2 Sekunden nach der Aktivierung des Binders statt.

Abschließend bleibt das Formwerkzeug 1 solange im geschlossenen Zustand, bis der Vorformling vollständig konsolidiert ist. Am Ende wird das Formwerkzeugs 1 vollständig geöffnet, sodass der Vorformling durch die Konturspanner 8, 9 freigegeben wird und aus dem Formwerkzeug 1 herausnehmbar ist.

Auch hier sind andere Ausführungsformen denkbar, so z.B., dass die Heißluftzufuhr und das vollständige Verformen des Faserhalbzeugs 14 nicht sequentiell, sondern gleichzeitig stattfinden oder dass es zu keiner Vorverformung des Faserhalbzeugs 14 in dem teilweise geschlossenen Zustand kommt.

## Patentansprüche

1. Verfahren zur Herstellung von Werkstücken, vorzugsweise Vorformlingen, aus Faserhalbzeugen (14), wobei das Verfahren die Schritte aufweist:
Bereitstellen eines mit Binder versehenen Faserhalbzeugs (14),
Wärmezufuhr zu dem mit Binder versehenen Faserhalbzeug (14) um den Binder zu aktivieren;
Verformen des mit Binder versehenen Faserhalbzeugs (14),
wobei
die Wärmezufuhr zu dem mit Binder versehenen Faserhalbzeug (14) und die Verformung des mit Binder versehenen Faserhalbzeugs (14) in derselben Bearbeitungsstation stattfinden,
wobei das Formwerkzeug (1) mindestens einen Konturspanner (8, 9) aufweist,
**dadurch gekennzeichnet, dass**
die Wärmezufuhr zu dem mit Binder versehenen Faserhalbzeug (14) durch Heißluft erfolgt,
wobei die Heißluft durch mindestens eine Öffnung (10, 11) in dem Konturspanner (8, 9) einem Zwischenraum (15) zwischen Formober- (2) und Formunterteil (3) zugeführt wird.

2. Verfahren nach Anspruch 1, **dadurch gekennzeichnet, dass** das mit Binder versehene Faserhalbzeug (14) durch das Schließen eines Formwerkzeugs (1), das ein Formober-(2) und ein Formunterteil (3) aufweist, verformt wird.

3. Verfahren nach Anspruch 2, **dadurch gekennzeichnet, dass** das Schließen des Formwerkzeugs (1) zwei Schritte aufweist, wobei in einem ersten Schritt das Formwerkzeug (1) teilweise geschlossen wird, um es in einen teilweise geschlossenen Zustand zu bringen, und in einem zweiten Schritt das Formwerkzeug (1) vollständig geschlossen wird, um es in einen vollständig geschlossenen Zustand zu bringen.

4. Verfahren nach Anspruch 3, **dadurch gekennzeichnet, dass** beim teilweisen Schließen des Formwerkzeugs (1) ein Zwischenraum (15) zwischen Formober- (2) und Formunterteil (3) des Formwerkzeugs (1) nach außen abgedichtet wird.

5. Verfahren nach einem der vorangegangenen Ansprüche, **dadurch gekennzeichnet, dass** die Heißluft durch mindestens eine Öffnung (10, 11) in dem Formwerkzeug (1) einem Zwischenraum (15) zwischen Formober- (2) und Formunterteil (3) zugeführt wird.

6. Verfahren nach einem der vorhergehenden Ansprüche, **dadurch gekennzeichnet, dass** das Faserhalbzeug (14) in einem ersten Schritt vorverformt wird, in einem zweiten Schritt erwärmt wird und in einem dritten Schritt verformt wird.

7. Vorrichtung zur Durchführung des Verfahrens nach einem der vorhergehenden Ansprüche, aufweisend:
eine Wärmequelle zum Aktivieren des Binders eines mit Binder versehenen Faserhalbzeugs (14);
ein Formwerkzeug (1) zur Wärmezufuhr zu dem mit Binder versehenen Faserhalbzeug und zum Verformen des mit Binder versehenen Faserhalbzeug (14),
wobei das Formwerkzeug (1) mindestens einen Konturspanner (8, 9) aufweist, der mit dem Formober- (2) oder dem Formunterteil (3) verbunden ist, wobei der Konturspanner (8, 9) so ausgestaltet ist, dass er dem jeweiligen Formober-(2) oder Formunterteil (3) während des Schließens des Formwerkzeugs (1) bis zu dem teilweise geschlossen Zustand vorauseilt und bei einem weiteren Schließen bis zu dem vollständig geschlossenen Zustand stillsteht,
wobei
der Konturspanner (8, 9) mindestens eine Öffnung (10, 11) aufweist, durch die Heißluft in den Zwischenraum (15) zwischen Formober- (2) und Formunterteil (3) eindüsbar ist.

8. Vorrichtung nach Anspruch 7, **dadurch gekennzeichnet, dass** das Formwerkzeug (1) einen Formober- (2) und einen Formunterteil (3) aufweist, die zum Öffnen des Formwerkzeugs (1) voneinander weg und zum Schließen des Formwerkzeugs (1) aufeinander zu bewegbar sind.

9. Vorrichtung nach Anspruch 7 und/oder 8, **dadurch gekennzeichnet, dass** das Formwerkzeug (1) in einem teilweise geschlossen Zustand einen Zwischenraum (15) zwischen Formober- (2) und Formunterteil (3) aufweist, der nach außen abgedichtet ist.

10. Vorrichtung nach einem der Ansprüche 7-9, **dadurch gekennzeichnet, dass** die Vorrichtung einen ersten Konturspanner (8) aufweist, der mit dem Formunterteil (2) verbunden ist, und einen zweiten Konturspanner (9) aufweist, der mit dem Formoberteil (3) verbunden ist, wobei die Konturspanner jeweils hülsenförmig ausgestaltet sind und konzentrisch zu Formunter- (2) bzw. Formoberteil (3) angeordnet sind.

11. Vorrichtung nach einem der Ansprüche 7-10, **dadurch gekennzeichnet, dass** das Formwerkzeug (1) mindestens eine Öffnung (10, 11) aufweist, durch die Heißluft in den Zwischenraum (15) zwischen Formober- (2) und Formunterteil (3) eindüsbar ist.

12. Vorrichtung nach Anspruch 10, **dadurch gekennzeichnet, dass** Formober- (2) und Formunterteil (3) und/oder erster (8) und zweiter Konturspanner (9) jeweils mindestens eine Öffnung aufweisen, durch die Heißluft in einen Zwischenraum (15) eindüsbar ist.

## Claims

1. Method for manufacturing workpieces, preferably preforms, from semifinished fibrous products (14), the method comprising the steps:
providing a semifinished fibrous product (14) impregnated with binder,
applying heat to the semifinished fibrous product (14) impregnated with binder in order to activate the binder;
forming the semifinished fibrous product (14) impregnated with binder, wherein the application of heat to the semifinished fibrous product (14) impregnated with binder and the forming of the semifinished fibrous product (14) impregnated with binder take place in the same processing station,
wherein the moulding tool (1) has at least one profile clamping vice (8, 9),
**characterised in that**
the application of heat to the semifinished fibrous product (14) impregnated with binder is effected using hot air,
wherein the hot air is passed through at least one opening (10, 11) in the profile clamping vice (8, 9) into a space (15) between the upper (2) and lower part (3) of the mould.

2. Method according to claim 1, **characterised in that** the semifinished fibrous product (14) impregnated with binder is formed through the closing of a moulding tool (1) having an upper mould part (2) and a lower mould part (3).

3. Method according to claim 2, **characterised in that** the closing of the moulding tool (1) involves two steps, wherein in a first step the moulding tool (1) is partially closed in order to bring it into a partially closed state, and in a second step the moulding tool (1) is completely closed in order to bring it into a completely closed state.

4. Method according to claim 3, **characterised in that** on partial closing of the moulding tool (1) a space (15) between the upper (2) and lower part (3) of the mould of the moulding tool (1) is sealed off from the outside.

5. Method according to one of the preceding claims, **characterised in that** the hot air is fed into a space (15) between the upper (2) and lower part (3) of the mould through at least one opening (10, 11) in the moulding tool (1) .

6. Method according to one of the preceding claims, **characterised in that** the semifinished fibrous product (14) is preformed in a first step, heated in a second step and formed in a third step.

7. Device for carrying out the method according to one of the preceding claims, comprising:
a heat source for activating the binder of a semifinished fibrous product (14) impregnated with binder;
a moulding tool (1) for applying heat to the semifinished fibrous product impregnated with binder and for forming the semifinished fibrous product (14) impregnated with binder,
wherein the moulding tool (1) has at least one profile clamping vice (8, 9) which is connected with the upper (2) or the lower part (3) of the mould, wherein the profile clamping vice (8, 9) is configured such that it moves ahead of the respective upper (2) or lower part (3) of the mould during the closing of the moulding tool (1) as far as the partially closed state and remains immobile on a further closing as far as the completely closed state, wherein the profile clamping vice (8, 9) has at least one opening (10, 11) through which the hot air can be injected into the space (15) between the upper (2) and lower part (3) of the mould.

8. Device according to claim 7, **characterised in that** the moulding tool (1) has an upper (2) and a lower mould part (3) which can be moved apart from one another to open the moulding tool (1) and moved towards one another to close the moulding tool (1).

9. Device according to claim 7 and/or 8, **characterised in that** in a partially closed state the moulding tool (1) has a space (15) between the upper (2) and lower part (3) of the mould which is sealed from the outside.

10. Device according to one of the claims 7-9, **characterised in that** the device has a first profile clamping vice (8) which is connected with the lower part of the mould (2) and a second profile clamping vice (9) which is connected with the upper part of the mould (3), wherein the profile clamping vices are in each case sleeve-like in form and are arranged concentrically to the lower (2) or upper (3) part of the mould.

11. Device according to one of the claims 7-10, **characterised in that** the moulding tool (1) has at least one opening (10, 11) through which the hot air can be injected into the space (15) between the upper (2) and lower part (3) of the mould.

12. Device according to claim 10, **characterised in that** upper (2) and lower part (3) of the mould and/or first (8) and second profile clamping vice (9) in each case have at least one opening through which the hot air can be injected into a space (15).

## Revendications

1. Procédé de fabrication de pièces, de préférence de préformes, à partir de produits semi-finis en fibres (14), dans lequel le procédé présente les étapes de :
mise à disposition d'un produit semi-fini en fibres (14) doté de liant,
apport de chaleur au produit semi-fini en fibres (14) doté de liant pour activer le liant ;
déformation du produit semi-fini en fibres (14) doté de liant,
dans lequel l'apport de chaleur au produit semi-fini en fibres (14) doté de liant et la déformation du produit semi-fini en fibres (14) doté de liant ont lieu dans la même station de traitement,
dans lequel l'outil de formage (1) présente au moins un tendeur de contour (8, 9),
**caractérisé en ce que**
l'apport de chaleur au produit semi-fini en fibres (14) doté de liant se fait par air chaud,
dans lequel l'air chaud est amené par au moins une ouverture (10, 11) dans le tendeur de contour (8, 9) à un espace intermédiaire (15) entre la partie supérieure de formage (2) et la partie inférieure de formage (3).

2. Procédé selon la revendication 1, **caractérisé en ce que** le produit semi-fini en fibres (14) doté de liant est déformé par la fermeture d'un outil de formage (1), qui présente une partie supérieure de formage (2) et une partie inférieure de formage (3).

3. Procédé selon la revendication 2, **caractérisé en ce que** la fermeture de l'outil de formage (1) présente deux étapes, dans lequel dans une première étape, l'outil de formage (1) est fermé en partie pour l'amener dans un état partiellement fermé, et dans une deuxième étape, l'outil de formage (1) est fermé complètement pour l'amener dans un état complètement fermé.

4. Procédé selon la revendication 3, **caractérisé en ce que** lors de la fermeture partielle de l'outil de formage (1), un espace intermédiaire (15) entre la partie supérieure de formage (2) et la partie inférieure de formage (3) de l'outil de formage (1) est rendu étanche vers l'extérieur.

5. Procédé selon l'une quelconque des revendications précédentes, **caractérisé en ce que** l'air chaud est amené par au moins une ouverture (10, 11) dans l'outil de formage (1) à un espace intermédiaire (15) entre la partie supérieure de formage (2) et la partie inférieure de formage (3).

6. Procédé selon l'une quelconque des revendications précédentes, **caractérisé en ce que** le produit semi-fini en fibres (14) est prédéformé dans une première étape, est chauffé dans une deuxième étape et est déformé dans une troisième étape.

7. Dispositif de réalisation du procédé selon l'une quelconque des revendications précédentes, présentant :
une source de chaleur pour l'activation du liant d'un produit semi-fini en fibres (14) doté de liant ;
un outil de formage (1) pour l'apport de chaleur au produit semi-fini en fibres doté de liant et pour la déformation du produit semi-fini en fibres (14) doté de liant,
dans lequel l'outil de formage (1) présente au moins un tendeur de contour (8, 9), qui est relié à la partie supérieure de formage (2) ou à la partie inférieure de formage (3), dans lequel le tendeur de contour (8, 9) est configuré de sorte qu'il précède respectivement la partie supérieure de formage (2) ou la partie inférieure de formage (3) pendant la fermeture de l'outil de formage (1) jusqu'à l'état partiellement fermé et est à l'arrêt lors d'une autre fermeture jusqu'à l'état entièrement fermé,
dans lequel le tendeur de contour (8, 9) présente au moins une ouverture (10, 11), par laquelle l'air chaud peut être injecté dans l'espace intermédiaire (15) entre la partie supérieure de formage (2) et la partie inférieure de formage (3).

8. Dispositif selon la revendication 7, **caractérisé en ce que** l'outil de formage (1) présente une partie supérieure de formage (2) et une partie inférieure de formage (3), qui peuvent être écartées l'une de l'autre pour l'ouverture de l'outil de formage (1) et rapprochées l'une de l'autre pour la fermeture de l'outil de formage (1).

9. Dispositif selon la revendication 7 et/ou 8, **caractérisé en ce que** l'outil de formage (1) présente à l'état partiellement fermé un espace intermédiaire (15) entre la partie supérieure de formage (2) et la partie inférieure de formage (3), qui est rendu étanche vers l'extérieur.

10. Dispositif selon l'une quelconque des revendications 7 à 9, **caractérisé en ce que** le dispositif présente un premier tendeur de contour (8), qui est relié à la partie inférieure de formage (2), et présente un deuxième tendeur de contour (9), qui est relié à la partie supérieure de formage (3), dans lequel les tendeurs de contour sont configurés chacun en forme de douille et sont agencés de manière concentrique à la partie inférieure de formage (2) ou à la partie supérieure de formage (3).

11. Dispositif selon l'une quelconque des revendications 7 à 10, **caractérisé en ce que** l'outil de formage (1) présente au moins une ouverture (10, 11), par laquelle l'air chaud peut être injecté dans l'espace intermédiaire (15) entre la partie supérieure de formage (2) et la partie inférieure de formage (3).

12. Dispositif selon la revendication 10, **caractérisé en ce que** la partie supérieure de formage (2) et la partie inférieure de formage (3) et/ou le premier (8) et le deuxième tendeurs de contour (9) présentent respectivement au moins une ouverture, par laquelle l'air chaud peut être injecté dans un espace intermédiaire (15).
